(19) **Europäisches Patentamt / European Patent Office / Office européen des brevets**

(11) **EP 4 636 015 A1**

(12) **EUROPEAN PATENT APPLICATION**

(43) Date of publication:
22.10.2025 Bulletin 2025/43

(21) Application number: 24170500.3

(22) Date of filing: 16.04.2024

(51) International Patent Classification (IPC):
*C08J 5/18* (2006.01)    *C08F 10/00* (2006.01)
*C08L 23/00* (2006.01)    *C08L 23/08* (2025.01)

(52) Cooperative Patent Classification (CPC):
(C-Sets available)
**C08J 5/18; C08F 110/06; C08F 210/16;**
**C08L 23/0815;** C08J 2323/08; C08J 2423/12;
C08L 2203/16                              (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• **WANG, Jingbo**
**4021 Linz (AT)**
• **NIEDERSUESS, Peter**
**4021 Linz (AT)**
• **ORLY, Camille**
**92400 Courbevoie (FR)**
• **ORTNER, Stefan**
**4021 Linz (AT)**

(74) Representative: **Maiwald GmbH**
**Elisenhof**
**Elisenstraße 3**
**80335 München (DE)**

(54) **BIAXIALLY ORIENTED POLYETHYLENE (BOPE) FILMS COMPRISING A POLYMERIC NUCLEATING AGENT**

(57)    The present invention relates to a BOPE film containing a polymer composition comprising a polymer of ethylene and a specific polymeric nucleating agent and to a use of the polymeric nucleating agent for improving the tensile modulus of a BOPE film.

EP 4 636 015 A1

**(Cont. next page)**

(52)  Cooperative Patent Classification (CPC): (Cont.)

C-Sets
**C08F 110/06, C08F 4/6492;**
**C08F 110/06, C08F 4/651;**
**C08F 110/06, C08F 4/6546;**
**C08F 210/16, C08F 2/34;**
**C08L 23/0815, C08L 23/12;**
C08F 110/06, C08F 2500/04, C08F 2500/12,
C08F 2500/17, C08F 2500/26, C08F 2500/30,
C08F 2500/33, C08F 2500/34;
C08F 210/16, C08F 210/08, C08F 2500/07,
C08F 2500/12, C08F 2500/17, C08F 2500/26,
C08F 2500/33, C08F 2500/34

**Description**

**Field of the Invention**

The present invention relates to a BOPE film containing a polymer composition comprising a polymer of ethylene and a specific polymeric nucleating agent and to a use of the polymeric nucleating agent for improving the tensile modulus of a BOPE film.

**Background to the Invention**

Biaxially oriented polypropylene (BOPP) films have been employed in the art for many years. These films, formed by a process in which a thicker film, typically a cast film, is stretched in two orthogonal directions, either sequentially or simultaneously. This stretching has the effect that the molecular chains are at least partially oriented in the resultant BOPP film. Biaxial orientation can result in increased toughness, increased stiffness, enhanced clarity, improved oil and grease resistance and enhanced barrier properties.

Relative to polypropylene, polyethylene is less straightforward to stretch, thus there are fewer examples of biaxially oriented polyethylene (BOPE) films.

A number of solutions have been proposed, which rely on very specific polyethylene design and/or multilayer structures, for example WO 2021/079255 A1, WO 2020/257411 A1, WO 2015/154253 A1, and WO 2009/139957 A2.

One underexplored avenue for improving the properties of biaxially oriented polyethylene (BOPE) films is nucleation. A wide range of nucleating agents are known for polypropylene (PP), typically improving properties such as crystallinity, optical properties, stiffness etc., although different nucleating agents may affect different properties to different extents.

The application of these PP-nucleating agents to other polyolefins, such as polyethylene, is far less straightforward, with most common PP-nucleating agents having little to no effect on polyethylenes.

EP 3 049 388 A1 describes various 4-amidobenzoates as nucleating agents, typically employed in amounts of 500 to 2000 ppm.

US 2013/165590 A1 describes the use of various commercially available nucleating agents, such as HPN-20E (which contains 1,2-cyclohexanedicarboxylic acid, calcium salt), HPN-68L (which contains Bicyclo (2.2.1) heptane-2,3-dicarboxylic acid, disodium salt), Na-11 (which contains sodium 2,2-methylene-bis-(4,6-ditertbutylphenyl)phosphate), Na-21 (which contains Hydroxybis (2,4,8,10-tetra-tert. butyl-6-hydroxy-12H-dibenzo(d,g)(1,3,2) dioxaphosphocin6-oxidato) aluminium), as well as various sorbitol-based nucleating agents, typically in amounts of 1500 ppm.

The limitations in polyethylene-nucleation are discussed in Dotson, Darin L. and Milliken. "A NOVEL NUCLEATING AGENT FOR POLYETHYLENE." (2007) and Seven, Karl M., Jeffrey M. Cogen and James F. Gilchrist. "Nucleating agents for high-density polyethylene A review. " Polymer Engineering and Science 56 (2016): 541-554.

As such, there remains a need for new strategies for improving the manufacture of BOPE films, such as polyethylene nucleation.

**Summary of the Invention**

It is the finding of the present invention that certain polymeric nucleating agents derived from a specific family of vinyl monomers are particularly efficient nucleating agents for polyethylene compositions, enabling the production of biaxially oriented polyethylene films (BOPE) having improved mechanical properties.

Therefore, in a first aspect, the present invention is directed to a biaxially oriented polyethylene (BOPE) film consisting of one or more layers, wherein at least one of the one or more layers consists of a polymer composition (PC), wherein the polymer composition (PC) comprises:

a) a polymer of ethylene (PE) having:

i) a melt flow rate ($MFR_2$), determined according to ISO 1133 at 190 °C and 2.16 kg, in the range from 0.1 to 8.0 g/10 min; and
ii) a density, determined according to ISO 1183-1, in the range from 910 to 970 kg/m$^3$,

b) a polymeric nucleating agent (NU) comprising units derived from a vinyl monomer having a structure according to formula (I):

$$H_2C=CH-CHR^1R^2 \qquad (I),$$

wherein $R^1$ and $R^2$ are either individual alkyl groups with one or more carbon atoms or form an optionally substituted saturated, unsaturated or aromatic ring or a fused ring system containing 4 to 20 carbon atoms, whereby in case $R^1$ and $R^2$ form an aromatic ring, the hydrogen atom of the - $CHR^1R^2$ moiety is not present,

wherein the combined amounts of the polymer of ethylene (PE) and the polymeric nucleating agent (NU), relative to the total weight of the polymer composition (PC), is at least 90.0 wt.-%.

In a second aspect, the present invention is directed to a use of a polymeric nucleating agent (NU) comprising units derived from a vinyl monomer having a structure according to formula (I):

$$H_2C=CH\text{-}CHR^1R^2 \qquad (I),$$

wherein $R^1$ and $R^2$ are either individual alkyl groups with one or more carbon atoms or form an optionally substituted saturated, unsaturated or aromatic ring or a fused ring system containing 4 to 20 carbon atoms, whereby in case $R^1$ and $R^2$ form an aromatic ring, the hydrogen atom of the -$CHR^1R^2$ moiety is not present,

for increasing the average tensile modulus ([Tens Mod(MD)+Tens Mod(TD)]/2) of a biaxially oriented polyethylene (BOPE) film containing at least one layer consisting of a polymer composition that comprises a polymer of ethylene (PE) and the polymeric nucleating agent (NU), wherein the increased average tensile modulus is increased relative to an analogous biaxially oriented polyethylene (BOPE) film wherein the polymer composition does not contain the polymeric nucleating agent (NU).

## Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.

In the following, amounts are given in % by weight (wt.-%) unless it is stated otherwise.

An ethylene homopolymer is a polymer that essentially consists of ethylene monomer units. Due to impurities especially during commercial polymerization processes, an ethylene homopolymer can comprise up to 0.1 mol-% comonomer units, preferably up to 0.05 mol-% comonomer units and most preferably up to 0.01 mol-% comonomer units.

An ethylene copolymer is a copolymer of ethylene monomer units and comonomer units in an amount of at least 0.1 mol-%, preferably selected from Cs-Cs alpha-olefins. Ethylene copolymers can comprise comonomer units from one or more comonomers different in their amounts of carbon atoms.

Polyethylenes are typically classified by their density and/or mode of production.

High density polyethylene (HDPE) typically has a density in the range from 940 to 970 kg/m³ and is produced in metal-catalyzed (e.g. Ziegler-Natta catalyzed, metallocene catalyzed, or chromium catalyzed) processes. HDPE typically has a low degree of branching.

Medium density polyethylene (MDPE) typically has a density in the range from 920 to 940 kg/m³ and is produced in metal-catalyzed (e.g. Ziegler-Natta catalyzed, metallocene catalyzed, or chromium catalyzed) processes. MDPE typically has a low degree of branching.

Linear-low density polyethylene (LLDPE) typically has a density in the range from 910 to 920 kg/m³ and is produced in metal-catalyzed (e.g. Ziegler-Natta catalyzed, metallocene catalyzed, or chromium catalyzed) processes. LLDPE typically has a low degree of branching.

The density in HDPE, MDPE and LLDPE is typically controlled by adding longer chain (e.g. $C_3$ to $C_8$) alpha-olefins as comonomers, although $MFR_2$ also plays a minor role.

Low density polyethylene (LDPE) typically has a density in the range from 917 to 930 kg/m³ and is produced in a free-radical induced (typically high-pressure) process, without the presence of any metal catalysts. LDPE has a much higher degree of branching than HDPE/MDPE/LLDPE (especially long chain branching), due to the nature of the radical-induced polymerization process, and is also typically less crystalline.

The person skilled in the art is familiar with the terms HDPE, MDPE, LLDPE and LDPE and with the typical advantages and disadvantages of each type of polyethylene.

The present invention will now be described in more detail.

## Detailed Description

In a first aspect, the present invention is directed to a biaxially oriented polyethylene (BOPE) film consisting of one or more layers, wherein at least one of the one or more layers consists of a polymer composition (PC).

**Polymer composition (PC)**

The polymer composition (PC) comprises:

a) a polymer of ethylene (PE);
b) a polymeric nucleating agent (NU),

wherein the combined amounts of the polymer of ethylene (PE) and the polymeric nucleating agent (NU), relative to the total weight of the polymer composition (PC), is at least 90.0 wt.-%.
The polymeric nucleating agent (NU) may be introduced to the polymer composition (PC) in any one of the following ways:

a) by directly mixing neat polymeric nucleating agent (NU) with the polymer of ethylene (PE);
b) by prepolymerizing the polymeric nucleating agent as a prepolymer when polymerizing the polymer of ethylene; and
c) by directly mixing a masterbatch containing the polymeric nucleating agent (NU) with the polymer of ethylene (PE).

If the polymeric nucleating agent (NU) has been introduced by mixing a masterbatch containing the polymeric nucleating agent (NU) with the polymer of ethylene (PE), i.e. option c), then the polymer composition (PC) will further comprise the masterbatch carrier polymer.
If option c) is employed, then the masterbatch itself may be prepared in any one of the following ways:

a) by directly mixing neat polymeric nucleating agent (NU) with the masterbatch carrier polymer; and
b) by prepolymerizing the polymeric nucleating agent as a prepolymer when polymerizing the masterbatch carrier polymer.

As such, in one embodiment, the polymer composition (PC) further comprises from 1.0 to 10.0 wt.-% of a polyolefin (PO) that is different to the polymer of ethylene (PE). If the masterbatch carrier polymer is identical to the polymer of ethylene (PE), then this masterbatch carrier polymer is assigned to the total amount of the polymer of ethylene (PE).
The polyolefin (PO) that is different to the polymer of ethylene (PE) is preferably a polyethylene or a polypropylene, more preferably an ethylene homopolymer or a propylene homopolymer. Most preferably, the polyolefin (PO) that is different to the polymer of ethylene (PE) is a polypropylene.
If the polyolefin (PO) that is different to the polymer of ethylene (PE) is a polyethylene, it is preferred that this polyethylene has a melt flow rate ($MFR_2$), determined according to ISO 1133 at 190 °C at a load of 2.16 kg, in the range from 0.3 to 40.0 g/10 min and/or a density, determined according to ISO 1183-1, in the range from 910 to 970 kg/m$^3$.
If the polyolefin (PO) that is different to the polymer of ethylene (PE) is a polypropylene, it is preferred that this polypropylene has a melt flow rate ($MFR_2$), determined according to ISO 1133 at 230 °C at a load of 2.16 kg, in the range from 1 to 1000 g/10 min. The polypropylene is preferably either a propylene homopolymer or a propylene random copolymer, such as a propylene ethylene random copolymer having an ethylene content, determined by quantitative $^{13}$C-NMR spectroscopy, in the range from more than 0.0 to 10.0 wt.-%, more preferably the polypropylene is a propylene homopolymer or a propylene ethylene random copolymer having an ethylene content, determined by quantitative $^{13}$C-NMR spectroscopy, in the range from more than 0.0 to 1.0 wt.-%, most preferably the polypropylene is a propylene homopolymer.
It is preferred that the polyolefin (PO) that is different to the polymer of ethylene (PE) is a propylene homopolymer having a melt flow rate ($MFR_2$), determined according to ISO 1133 at 230 °C and 2.16 kg, in the range from 1.0 to 15.0 g/10 min, more preferably in the range from 3.0 to 12.0 g/10 min, most preferably in the range from 4.0 to 9.0 g/10 min.
It is preferred that the polyolefin (PO) that is different to the polymer of ethylene (PE) is a propylene homopolymer having a melting temperature ($T_m$), determined according to ISO 11357, in the range from 160 to 172 °C, more preferably 162 to 170 °C, most preferably in the range from 164 to 168 °C
It is preferred that the polyolefin (PO) that is different to the polymer of ethylene (PE) is a propylene homopolymer having an enthalpy of fusion ($H_m$), determined according to ISO 11357, in the range from 100 to 130 J/g, more preferably in the range from 105 to 120 J/g, most preferably in the range from 108 to 115 J/g.
It is preferred that the polyolefin (PO) that is different to the polymer of ethylene (PE) is a propylene homopolymer having a molecular weight distribution (Mw/Mn), determined by gel permeation chromatography, in the range from 4 to 20, more preferably in the range from 5 to 15, most preferably in the range from 6 to 10.
In addition to the polymer of ethylene (PE), the polymeric nucleating agent (NU) and the optional polyolefin (PO) that is different to the polymer of ethylene (PE), the polymer composition (PC) may also contain further additives (A).

The skilled practitioner would be able to select suitable additives that are well known in the art.

The further additives (A) are preferably selected from nucleating agents (other than the polymeric nucleating agent (NU)), pigments, antioxidants, UV-stabilizers, anti-scratch agents, mould release agents, acid scavengers, lubricants, anti-static agents, and mixtures thereof.

It is understood that the content of additives includes any carrier polymers used to introduce the additives to the precursor polymer composition (PPC), i.e. masterbatch carrier polymers. An example of such a carrier polymer would be a high-density polyethylene in the form of powder or pellets.

The polymer composition (PC) preferably comprises, more preferably consists of:

a) an amount in the range from 84.99 to 99.999999 wt.-%, more preferably in the range from 86.995 to 99.99999 wt.-%, most preferably in the range from 88.998 to 99.99995 wt.-%, relative to the total weight of the polymer composition (PC), of the polymer of ethylene (PE);

b) an amount in the range from 0.01 to 100 ppm, more preferably in the range from 0.1 to 50 ppm, most preferably in the range from 0.5 to 20 ppm, relative to the total weight of the polymer composition (PC), of the polymeric nucleating agent (NU);

c) optionally, an amount in the range from 1.0 to 10.0 wt.-%, more preferably in the range from 2.0 to 8.0 wt.-%, most preferably in the range from 3.0 to 6.0 wt.-%, relative to the total weight of the polymer composition (PC), of a polyolefin (PO) that is different to the polymer of ethylene (PE); and

d) optionally, from 0.0 to 5.0 wt.-% of further additives (A).

In one embodiment, the polymer composition (PC) comprises, more preferably consists of:

a) an amount in the range from 84.99 to 98.999999 wt.-%, more preferably in the range from 86.995 to 97.99999 wt.-%, most preferably in the range from 88.998 to 96.99995 wt.-%, relative to the total weight of the polymer composition (PC), of the polymer of ethylene (PE);

b) an amount in the range from 0.01 to 100 ppm, more preferably in the range from 0.1 to 50 ppm, most preferably in the range from 0.5 to 20 ppm, relative to the total weight of the polymer composition (PC), of the polymeric nucleating agent (NU);

c) an amount in the range from 1.0 to 10.0 wt.-%, more preferably in the range from 2.0 to 8.0 wt.-%, most preferably in the range from 3.0 to 6.0 wt.-%, relative to the total weight of the polymer composition (PC), of a polyolefin (PO) that is different to the polymer of ethylene (PE); and

d) optionally, from 0.0 to 5.0 wt.-% of further additives (A).

In an alternative embodiment, the polymer composition (PC) comprises, more preferably consists of:

a) an amount in the range from 94.99 to 98.999999 wt.-%, more preferably in the range from 94.995 to 99.99999 wt.-%, most preferably in the range from 94.998 to 99.99995 wt.-%, relative to the total weight of the polymer composition (PC), of the polymer of ethylene (PE);

b) an amount in the range from 0.01 to 100 ppm, more preferably in the range from 0.1 to 50 ppm, most preferably in the range from 0.5 to 20 ppm, relative to the total weight of the polymer composition (PC), of the polymeric nucleating agent (NU); and

c) optionally, from 0.0 to 5.0 wt.-% of further additives (A).

It is preferred that the polymer composition (PC) comprises, more preferably consists of:

a) an amount in the range from 86.995 to 99.99999 wt.-%, relative to the total weight of the polymer composition (PC), of the polymer of ethylene (PE);

b) an amount in the range from 0.1 to 50 ppm, relative to the total weight of the polymer composition (PC), of the polymeric nucleating agent (NU);

c) optionally, an amount in the range from 2.0 to 8.0 wt.-%, relative to the total weight of the polymer composition (PC), of a polyolefin (PO) that is different to the polymer of ethylene (PE); and

d) optionally, from 0.0 to 5.0 wt.-% of further additives (A).

It is further preferred that the polymer composition (PC) comprises, more preferably consists of:

a) an amount in the range from 88.998 to 99.99995 wt.-%, relative to the total weight of the polymer composition (PC), of the polymer of ethylene (PE);

b) an amount in the range from 0.5 to 20 ppm, relative to the total weight of the polymer composition (PC), of the polymeric nucleating agent (NU);

c) optionally, an amount in the range from 3.0 to 6.0 wt.-%, relative to the total weight of the polymer composition (PC), of a polyolefin (PO) that is different to the polymer of ethylene (PE); and

d) optionally, from 0.0 to 5.0 wt.-% of further additives (A).

The polymer composition (PC) preferably has a melt flow rate ($MFR_2$), determined according to ISO 1133 at 190 °C at a load of 2.16 kg, in the range from 0.1 to 8.0 g/10 min, more preferably in the range from 0.3 to 6.0 g/10 min, most preferably in the range from 0.5 to 5.0 g/10 min.

The polymer composition (PC) preferably has a melt flow rate ($MFR_{21}$), determined according to ISO 1133 at 190 °C at a load of 21.6 kg, in the range from 50 to 500 g/10 min, more preferably in the range from 80 to 350 g/10 min, most preferably in the range from 100 to 250 g/10 min.

The polymer composition (PC) preferably has a flow rate ratio ($FRR_{21/2}$), determined according to ISO 1133 at 190 °C at loads of 21.6 kg and 2.16 kg, in the range from 15 to 70, more preferably in the range from 20 to 60, most preferably in the range from 25 to 55.

The polymer composition (PC) preferably has a crystallization temperature ($T_c$), determined according to ISO 11357 in the range from 107 to 127 °C, more preferably in the range from 112 to 124 °C, most preferably in the range from 116 to 121 °C.

The polymer composition (PC) preferably has a crystallization temperature ($T_c$), determined according to ISO 11357, that is at least 1 °C, more preferably at least 2 °C higher than the crystallization temperature ($T_c$), determined according to ISO 11357, of the polymer of ethylene (PE).

The polymer composition (PC) preferably has a crystallization temperature ($T_c$), determined according to ISO 11357, that is at least 1 °C, more preferably at least 2 °C higher than the crystallization temperature ($T_c$), determined according to ISO 11357, of an identical polymer composition that does not contain the polymeric nucleating agent.

The polymer composition (PC) preferably has a melting temperature ($T_m$), determined according to ISO 11357, in the range from 120 to 140 °C, more preferably in the range from 124 to 137 °C, most preferably in the range from 128 to 134 °C.

The polymer composition (PC) preferably has an enthalpy of fusion ($H_m$), determined according to ISO 11357, in the range from 175 to 215 J/g, more preferably in the range from 180 to 210 J/g, most preferably in the range from 185 to 205 J/g.

The individual components of the polymer composition (PC) will now be described in more detail.

**Polymer of ethylene (PE)**

The polymer of ethylene (PE) has a density, determined according to ISO 1183-1, in the range from 910 to 970 kg/m$^3$, more preferably in the range from 930 to 965 kg/m$^3$, most preferably in the range from 950 to 960 kg/m$^3$.

The polymer of ethylene (PE) has a melt flow rate ($MFR_2$), determined according to ISO 1133 at 190 °C at a load of 2.16 kg, in the range from 0.1 to 8.0 g/10 min, more preferably in the range from 0.3 to 6.0 g/10 min, most preferably in the range from 0.5 to 5.0 g/10 min

The polymer of ethylene (PE) may be an ethylene homopolymer or an ethylene copolymer. If the polymer of ethylene (PE) is an ethylene copolymer, then it is preferred that the comonomer(s) is/are selected from the group consisting of $C_3$-$C_8$ alpha-olefins.

The polymer of ethylene (PE) is preferably a high density polyethylene (HDPE), meaning that it has been produced by a metal-catalyzed polymerization process. Most preferably, the polymer of ethylene (PE) has been produced in the presence of a Ziegler-Natta catalyst.

The person skilled in the art would be aware that the choice of catalyst is inferable from the balance of properties in the polymer of ethylene (PE) and can be ascertained by inspection of the polymer of ethylene (PE).

The polymer of ethylene (PE) may be unimodal or multimodal, for example bimodal. Preferably, the polymer of ethylene (PE) is unimodal.

The polymer of ethylene (PE) preferably has a zero-shear viscosity ($\eta_0$), determined according to ISO 6721, in the range from 1,000 to 10,000 Pa.s, more preferably in the range from 1,500 to 7,000 Pa.s, most preferably in the range from 2,000 to 4,000 Pa.s.

The polymer of ethylene (PE) preferably has a shear thinning index ($SHI_{0/50}$), determined according to ISO 6721, in the range from 1.00 to 7.00, more preferably in the range from 1.50 to 6.00, most preferably in the range from 2.00 to 5.00.

The polymer of ethylene (PE) preferably has a shear thinning index ($SHI_{0/100}$), determined according to ISO 6721, in the range from 1.00 to 9.00, more preferably in the range from 2.00 to 8.00, most preferably in the range from 3.00 to 7.00.

The polymer of ethylene (PE) preferably has a shear thinning index ($SHI_{1/100}$), determined according to ISO 6721, in the range from 1.00 to 8.00, more preferably in the range from 2.00 to 7.00, most preferably in the range from 2.50 to 6.00.

The polymer of ethylene (PE) preferably has a crystallization temperature ($T_c$), determined according to ISO 11357 in the range from 105 to 125 °C, more preferably in the range from 110 to 122 °C, most preferably in the range from 114 to 119 °C.

The polymer of ethylene (PE) preferably has a melting temperature ($T_m$), determined according to ISO 11357, in the range from 120 to 140 °C, more preferably in the range from 124 to 137 °C, most preferably in the range from 128 to 134 °C.

The polymer of ethylene (PE) preferably has an enthalpy of fusion ($H_m$), determined according to ISO 11357, in the range from 190 to 220 J/g, more preferably in the range from 195 to 215 J/g, most preferably in the range from 200 to 210 J/g.

**Polymeric nucleating agent (NU)**

The polymeric nucleating agent (NU) comprises, more preferably consists of, units derived from a vinyl monomer having a structure according to formula (I):

$$H_2C=CH-CHR^1R^2 \qquad (I),$$

wherein $R^1$ and $R^2$ are either individual alkyl groups with one or more carbon atoms or form an optionally substituted saturated, unsaturated or aromatic ring or a fused ring system containing 4 to 20 carbon atoms, whereby in case $R^1$ and $R^2$ form an aromatic ring, the hydrogen atom of the $-CHR^1R^2$ moiety is not present.

In one embodiment, the polymeric nucleating agent is a homopolymer, i.e. consists of units derived from a vinyl monomer having a structure according to formula (I).

It is preferred that the vinyl monomer having a structure according to formula (I) is selected from the group consisting of vinyl cycloalkanes, in particular vinyl cyclohexane, vinyl cyclopentane, and vinyl-2-methyl cyclohexane, 3-methyl-1-butene, 3-ethyl-1-hexene, 3-methyl-1-pentene, 4-methyl-1-pentene and mixtures thereof.

It is especially preferred that the vinyl monomer having a structure according to formula (I) is selected from the group consisting of vinyl cyclohexane, vinyl cyclopentane, and vinyl-2-methyl cyclohexane, and mixtures thereof.

Most preferably, the vinyl monomer having a structure according to formula (I) is vinyl cyclohexane.

It is particularly preferred that the polymeric nucleating agent (NU) is a homopolymer of vinyl cyclohexane.

**Method for forming the polymer composition (PC)**

The polymer composition (PC) may be prepared by a method comprising the following steps in the given order:

a) providing the polymer of ethylene (PE);
b) providing the polymeric nucleating agent (NU) or providing a nucleating agent masterbatch (NU-MB) that consists of polyolefin (PO) and the polymeric nucleating agent (NU);
c) optionally, providing further additives (A);
d) melt mixing the polymer of ethylene (PE), either the polymeric nucleating agent (NU) or the polymeric nucleating agent masterbatch (NU-MB), and the optional further additives;
e) extruding the resulting mixture, thereby obtaining the polymer composition (PC) of the first aspect.

In one embodiment, step b) involves providing a nucleating agent masterbatch (NU-MB) that consists of the polyolefin (PO) and the polymeric nucleating agent (NU). In this embodiment, the nucleating agent masterbatch preferably contains the polymeric nucleating agent (NU) in an amount in the range from 0.1 to 100 ppm, more preferably in the range from 0.5 to 50 ppm, most preferably in the range from 1.0 to 20 ppm.

The nucleating agent masterbatch (NU-MB) is preferably added in an amount in the range from 1.0 to 10.0 wt.-%, more preferably in the range from 2.0 to 8.0 wt.-%, most preferably in the range from 3.0 to 6.0 wt.-%, relative to the total weight of the polymer composition (PC).

The polyolefin (PO) may be the polyolefin (PO) that is different from the polymer of ethylene (PE) of the first aspect or it may be the polymer of ethylene (PE) of the first aspect.

All fallback positions and preferred embodiments of the polymer composition (PC), the polymer of ethylene (PE), the polyolefin (PO) that is different to the polymer of ethylene (PE) and the further additives (A) of the first aspect apply mutatis mutandis to the method for preparing the polymer composition (PC).

As mentioned above, it is also possible to prepare the polymer composition (PC) by a process comprising the following steps in the given order:

a) providing a catalyst suitable for polyethylene polymerization;

b) prepolymerizing in a prepolymerization reactor monomers comprising a vinyl monomer having a structure according to formula (I), thereby obtaining a prepolymerized catalyst;

c) transferring the prepolymerized catalyst into one or more further reactors and polymerizing one or more ethylene polymer fractions, thereby generating the polymer of ethylene (PE) that contains the polymeric nucleating agent (NU),

d) melt mixing the polymer of ethylene (PE) that contains the polymeric nucleating agent (NU), optionally with further polymers and/or additives (A), thereby obtaining the polymer composition.

All fallback positions and preferred embodiments of the polymer composition (PC), the polymer of ethylene (PE), and the further additives (A) of the first aspect apply mutatis mutandis to this further method.

**Biaxially oriented polyethylene film**

The biaxially oriented polyethylene (BOPE) of the present invention preferably has a thickness in the range from 5 to 50 $\mu$m, more preferably in the range from 6 to 30 $\mu$m, most preferably in the range from 8 to 25 $\mu$m.

It is preferred that the total stretching ratio is at least 25, more preferably at least 40, yet more preferably at least 55, still more preferably at least 75, most preferably at least 90. A stretching ratio expressed as $6\times12$ would have a total stretching ratio of 72, whilst a stretching ratio of $6\times16$ would have a total stretching ratio of 96.

The biaxially oriented polyethylene (BOPE) of the present invention preferably has an average tensile modulus ([Tens Mod(MD)+Tens Mod(TD)]/2), determined according to ISO 527-3, in the range from 1500 to 4000 MPa, more preferably in the range from 2000 to 3500 MPa, most preferably in the range from 2200 to 3000 MPa.

The biaxially oriented polyethylene (BOPE) of the present invention preferably has an average tensile strength ([Tens Str(MD)+Tens Str(TD)]/2), determined according to ISO 527-3, in the range from 40 MPa to 250 MPa, more preferably in the range from 60 to 200 MPa, most preferably in the range from 80 to 150 MPa.

The biaxially oriented polyethylene (BOPE) of the present invention preferably has an average elongation at break ([Elong@B(MD)+Elong@B(TD)]/2), determined according to ISO 527-3, in the range from 30 to 100%, more preferably in the range from 40 to 90%, most preferably in the range from 50 to 80%.

**Use**

In a second aspect, the present invention is directed to a use of a polymeric nucleating agent (NU) comprising units derived from a vinyl monomer having a structure according to formula (I):

$$H_2C=CH\text{-}CHR^1R^2 \qquad (I),$$

wherein $R^1$ and $R^2$ are either individual alkyl groups with one or more carbon atoms or form an optionally substituted saturated, unsaturated or aromatic ring or a fused ring system containing 4 to 20 carbon atoms, whereby in case $R^1$ and $R^2$ form an aromatic ring, the hydrogen atom of the $-CHR^1R^2$ moiety is not present, for increasing the average tensile modulus ([Tens Mod(MD)+Tens Mod(TD)]/2) of a biaxially oriented polyethylene (BOPE) film containing at least one layer consisting of a polymer composition that comprises a polymer of ethylene (PE) and the polymeric nucleating agent (NU), wherein the increased average tensile modulus is increased relative to an analogous biaxially oriented polyethylene (BOPE) film wherein the polymer composition does not contain the polymeric nucleating agent (NU)

Additionally, the present invention is directed to a use of a nucleating agent masterbatch (NU-MB) consisting of polyolefin (PO) and a polymeric nucleating agent (NU) comprising units derived from a vinyl monomer having a structure according to formula (I):

$$H_2C=CH\text{-}CHR^1R^2 \qquad (I),$$

wherein $R^1$ and $R^2$ are either individual alkyl groups with one or more carbon atoms or form an optionally substituted saturated, unsaturated or aromatic ring or a fused ring system containing 4 to 20 carbon atoms, whereby in case $R^1$ and $R^2$ form an aromatic ring, the hydrogen atom of the $-CHR^1R^2$ moiety is not present, for increasing the average tensile modulus ([Tens Mod(MD)+Tens Mod(TD)]/2) of a biaxially oriented polyethylene (BOPE) film containing at least one layer consisting of a polymer composition that comprises a polymer of ethylene (PE) and the nucleating agent masterbatch (NU-MB), wherein the increased average tensile modulus is increased relative to an analogous biaxially oriented polyethylene (BOPE) film wherein the polymer composition does not contain the nucleating agent masterbatch (NU-MB).

All fallback positions and preferred embodiments of the polymer composition (PC), the polymer of ethylene (PE), and the further additives (A) of the first aspect, as well as of the polymeric nucleating agent masterbatch (NU-MB) and the polyolefin (PO) of the method to prepare the polymer composition (PC) apply mutatis mutandis to the uses of the second aspect.

## EXAMPLES

### 1. Determination Methods

The following definitions of terms and determination methods apply for the above general description of the invention as well as to the below examples unless otherwise defined.

### Melt flow rate

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The $MFR_2$ of polyethylene was measured at a temperature of 190 °C and a load of 2.16 kg and the $MFR_{21}$ of polyethylene was measured at a temperature of 190 °C and a load of 21.6 kg. The quantity FRR (flow rate ratio) denotes the ratio of flow rates at different loads. Thus, $FRR_{21/2}$ denotes the value of $MFR_{21}/MFR_2$. The $MFR_2$ of polypropylene was measured at a temperature of 230 °C and a load of 2.16 kg.

### Density

Density of the polymer was measured according to ISO 1183-1:2004 Method A on compression moulded specimen prepared according to EN ISO 1872-2 (Feb 2007) and is given in $kg/m^3$.

### DSC analysis, melting temperature (Tm), crystallization temperature (Tc) and melt enthalpy (Hm)

Measured with a TA Instrument Q2000 differential scanning calorimetry (DSC) on 5 to 7 mg samples. DSC is run according to ISO 11357 / part 3 /method C2 in a heat / cool / heat cycle with a scan rate of 10 °C/min in the temperature range of 0 to +200 °C. The crystallization temperature (Tc) was determined from the cooling step, while melting temperature (Tm) and melting enthalpy (Hm) were determined from the second heating step. The crystallinity is calculated from the melting enthalpy by assuming an Hm-value of 290 J/g for a fully crystalline polyethylene (see L. Mandelkern, R. G. Alamo, In Physical properties of polymers handbook, 2nd ed., Mark, J.E., Eds. Springer: New York, 2007)

### Number average molecular weight ($M_n$), weight average molecular weight ($M_w$) and molecular weight distribution ($M_w/M_n$)

The weight average molecular weight $M_w$ and the molecular weight distribution ($M_w/M_n$), wherein $M_n$ is the number average molecular weight and $M_w$ is the weight average molecular weight) is measured by a method based on ISO 16014-1:2003 and ISO 16014-4:2003. A Waters Alliance GPCV 2000 instrument, equipped with refractive index detector and online viscosimeter was used with $3 \times$ TSK-gel columns (GMHXL-HT) from TosoHaas and 1,2,4-trichlorobenzene (TCB, stabilized with 200 mg/L 2,6-Di tert butyl-4-methyl-phenol) as solvent at 145°C and at a constant flow rate of 1 mL/min. 216.5 $\mu$L of sample solution were injected per analysis. The column set was calibrated using relative calibration with 19 narrow MWD polystyrene (PS) standards in the range of 0.5 kg/mol to 11500 kg/mol and a set of well characterized broad polypropylene standards. All samples were prepared by dissolving 5 to 10 mg of polymer in 10 mL (at 160°C) of stabilized TCB (same as mobile phase) and keeping for 3 hours with continuous shaking prior sampling in into the GPC instrument.

### Dynamic Rheology

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates using nitrogen atmosphere and setting a strain within the linear viscoelastic regime. The oscillatory shear tests were done at 190 °C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where $\sigma_0$, and $\gamma_0$ are the stress and strain amplitudes, respectively; $\omega$ is the angular frequency; $\delta$ is the phase shift (loss angle between applied strain and stress response); t is the time.

Dynamic test results are typically expressed by means of several different rheological functions, namely the shear storage modulus, G', the shear loss modulus, G", the complex shear modulus, G*, the complex shear viscosity, $\eta^*$, the dynamic shear viscosity, $\eta'$, the out-of-phase component of the complex shear viscosity, $\eta''$ and the loss tangent, tan $\eta$, which can be expressed as follows:

$$G' = \frac{\sigma_0}{\gamma_0} \cos\delta \; [Pa] \qquad (3)$$

$$G'' = \frac{\sigma_0}{\gamma_0} \sin\delta \; [Pa] \qquad (4)$$

$$G^* = G' + iG'' \; [Pa] \qquad (5)$$

$$\eta^* = \eta' - i\eta'' \; [Pa \cdot s] \qquad (6)$$

$$\eta' = \frac{G''}{\omega} \; [Pa \cdot s] \qquad (7)$$

$$\eta'' = \frac{G'}{\omega} \; [Pa \cdot s] \qquad (8)$$

The determination of so-called Shear Thinning Index, which correlates with MWD and is independent of Mw, is done as described in equation 9.

$$SHI_{(x/y)} \;\; = \;\; \frac{Eta^* \; for \; (G^* = x \; kPa)}{Eta^* \; for \; (G^* = y \; kPa)} \qquad (9)$$

For example, the $SHI_{(0/50)}$ is defined by the value of the complex viscosity, in Pa s, determined for a value of G* equal to 0 kPa, divided by the value of the complex viscosity, in Pa s, determined for a value of G* equal to 50 kPa.

The $SHI_{(0/100)}$ is accordingly defined by the value of the complex viscosity, in Pa s, determined for a value of G* equal to 0 kPa, divided by the value of the complex viscosity, in Pa s, determined for a value of G* equal to 100 kPa.

The $SHI_{(1/100)}$ is accordingly defined by the value of the complex viscosity, in Pa s, determined for a value of G* equal to 1 kPa, divided by the value of the complex viscosity, in Pa s, determined for a value of G* equal to 100 kPa.

The values of storage modulus (G'), loss modulus (G"), complex modulus (G*) and complex viscosity ($\eta^*$) were obtained as a function of frequency ($\omega$).

Thereby, e.g. $\mu^*_{300rad/s}$ (eta*$_{300rad/s}$) is used as abbreviation for the complex viscosity at the frequency of 300 rad/s and $\eta^*_{005rad/s}$ (eta*$_{0.05rad/s}$) is used as abbreviation for the complex viscosity at the frequency of 0.05 rad/s.

The so-called Zero Shear Viscosity (ZSV) is the plateau viscosity at low enough shear rate (angular frequency). It is determined by fitting the Carreau-Yasuda model on the complex viscosity versus angular frequency. The Carreau-Yasuda equation describes the viscosity curve of a material with Newtonian regions at low shear rates and a shear thinning (power law) region at medium shear rates. Fitting is done by Rheoplus or Rheocompass software by equation 12.

$$|\eta^*(\omega)| = \frac{\eta_0}{(1+(\lambda\,\omega)^a\,)^{\frac{n-1}{a}}} \qquad\qquad (12)$$

*where*

$\omega$     *angular frequency in rad/s*
$\eta^*$     *complex viscosity in Pa·s*
$\eta_0$     *zero shear viscosity in Pa·s*
*a*     *Carreau constant*
*n*     *shear thinning exponent*
*A*     *relaxation time in s*

As the ZSV (in low frequency regions) is not always fully reached within applied experimental conditions, the determination of the ZSV shall be done with special care to avoid extreme extrapolations, for example and thus, high errors.

For example, if the last experimental data point for the complex viscosity (e.g. at 0.01 rad/s) is about 70% of the calculated Zero Shear Viscosity ($\eta_0$) value by fitting of Carreau-Yasuda model, then the calculated $\eta_0$ can be accepted. For cases in which the deviation is higher (last experimental complex viscosity < 70% of calculated $\eta_0$), the $\eta_0$ should not be reported. The estimation of the rheological behaviour at low frequencies, can be alternatively done, by providing the complex viscosity at an angular frequency of 0.05 rad/s (eta @0.05 rad/s).

References:

[1] "Rheological characterization of polyethylene fractions", Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362.
[2] "The influence of molecular structure on some rheological properties of polyethylene", Heino, E.L., Borealis Polymers Oy, Porvoo, Finland, Annual Transactions of the Nordic Rheology Society, 1995.
[3] "Definition of terms relating to the non-ultimate mechanical properties of polymers", Pure & Appl. Chem., Vol. 70, No. 3, pp. 701-754, 1998.

**Quantification of microstructure by NMR spectroscopy**

Quantitative $^{13}$C{$^1$H} NMR spectra were recorded in the solution-state using a Bruker Advance III 400 NMR spectrometer operating at 400.15 and 100.62 MHz for $^1$H and $^{13}$C respectively. All spectra were recorded using a $^{13}$C optimised 10 mm extended temperature probe head at 125 °C using nitrogen gas for all pneumatics.

Approximately 200 mg of material was dissolved in *1,2*-tetrachloroethane-*d$_2$* (TCE-*d$_2$*). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}$C{$^1$H} NMR spectra were processed, integrated and relevant quantitative properties determined from the integrals using proprietary computer programs.

All chemical shifts are internally referenced to the methyl isotactic pentad (mmmm) at 21.85 ppm. Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (mmmm\ /\ \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8})\ /\ 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e]\ mol\text{-}\% = 100 * (P_{21e}\ /\ P_{total})$$

The comonomer fraction was quantified using the method of Wang et. al. (Wang, W-J., Zhu, S., Macromolecules 33 (2000), 1157) through integration of multiple signals across the whole spectral region in the $^{13}C\{^{1}H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S_{\beta\beta} + S_{\beta\gamma} + S_{\beta\delta} + 0.5(S_{\alpha\beta} + S_{\alpha\gamma}))$$

Through the use of this set of sites the corresponding integral equation becomes:

$$E = 0.5(I_{H} + I_{G} + 0.5(I_{C} + I_{D}))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\text{-}\%] = 100 * f_{E}$$

The weight percent comonomer incorporation was calculated from the mole fraction:

$$E\ [wt.\text{-}\%] = 100 * (f_{E} * 28.06)\ /\ ((f_{E} * 28.06) + ((1\text{-}f_{E}) * 42.08))$$

**Tensile Properties** in machine and transverse direction were determined according to ISO 527-1/-3 at 23°C on the biaxially oriented polyethylene films produced as indicated below. In addition, the tensile modulus (secant modulus between 0.05% and 0.25% elongation) was also determined. Testing was performed at a cross head speed of 1 mm/min to determine the tensile modulus, then the test speed was increased to 200 mm/min until the film broke.

## 2. Examples

### 2.1 Preparation of PE1

For the polymerization of PE1, Lynx 200 catalyst, commercially available from W.R. Grace (US), was used.

PE1 was polymerized in a Borstar pilot plant according to the following general procedure, according to the conditions given in Table 1. PE1 was produced in a single reactor and is thus unimodal.

**Table 1** Polymerization conditions and properties of PE1

|  |  | PE1 |
|---|---|---|
| **Polymerization in GPR** | | |
| Temperature | [°C] | 93 |
| Pressure | [kPa] | 2100 |
| $H_2/C_2$ | [mol/kmol] | 280 |
| $C_4/C_2$ | [mol/kmol] | 21 |
| Cz-partial pressure | [kPa] | 600 |
| **Final properties** | | |
| $MFR_2$ | [g/10 min] | 4.0 |
| density | [kg/m$^3$] | 954 |
| T,; | [°C] | 117 |
| Tm | [°C] | 132 |
| Hm | [J/g] | 203 |
| $\eta_0$ | [Pa.s] | 2620 |
| $SHI_{0/50}$ | [-] | 2.34 |
| $SHI_{0/100}$ | [-] | 3.34 |
| $SHI_{1/100}$ | [-] | 2.92 |

The resultant polymer powder was purged with nitrogen (about 50 kg/h) for one hour, stabilized with commercial stabilizers (1100 ppm of Irganox 1010, 1100 ppm of Irgafos 168, and 1100 ppm of calcium stearate) and then extruded to pellets in a ZSK 18 counter-rotating twin screw extruder (manufactured by Coperion GmbH, DE) having a melt temperature of 210 °C and a throughput of 7 kg/h.

### 2.2 Preparation of PP1

For the polymerization of PP1, the Ziegler-Natta catalyst as used in the inventive examples of WO 2016/066446 A1 (i.e. with VCH prepolymerization) was used.

PP1 was produced in a Borstar pilot plant, with prepolymerizer-loop configuration, under the following polymerization conditions: loop temperature 75 °C, pressure 35 bar, TEAL 150 g/t C3, Donor D 20g/t C3. Hydrogen was used to adjust MFR to 6.5 g/10min, the typical condition H2/C3 1.5 mol/kmol. The powder was compounded with commercial stabilizers (330 ppm of Irganox 1010, 667 ppm of Irgafos 168, and 400 ppm of calcium stearate) and then extruded to pellets in a ZSK 18 counter-rotating twin screw extruder (manufactured by Coperion GmbH, DE) having a melt temperature of 210 °C and a throughput of 7 kg/h. The final product contained 15 ppm of pVCH.

The properties of PP1 are given in Table 2:

**Table 2** Properties of PP1

|  |  | PP1 |
|---|---|---|
| **Final properties** |  |  |
| $MFR_2$ | [g/10 min] | 6.5 |
| T,; | [°C] | 127 |
| Tm | [°C] | 166 |
| Hm | [J/g] | 111 |
| Mw/Mn | [-] | 6.6 |
| $\eta_0$ | [Pa.s] | 2620 |
| Flexural Modulus | [MPa] | 2000 |

### 2.3 Compounding of inventive and comparative examples

CE1 and IE1 were prepared according to the recipes given in Table 3 by melt mixing and extruding using a ZSK 18 counter-rotating twin screw extruder (manufactured by Coperion GmbH, DE) having a melt temperature of 210 °C and a throughput of 7 kg/h.

BOPE films of CE1 and IE1 were produced on a BOPE pilot line, equipped with extrusion unit, MDO stretching unit, and TDO stretching unit. The extrusion unit was set to produce precursor films having a thickness of 864 $\mu$m (CE1) and 960 $\mu$m (IE1). The melt temperature in the extruder is 260°C, the chill roll temperature is 60°C, and the throughput rate is 25 kg/h. The MDO stretching unit was operated at 120 °C , whilst the TDO stretching unit was operated at 137 °C. The final film thickness and the stretching ratios are given in Table 3 (Note: these conditions represent the optimised maximum stretching ratios for IE1 and CE1, rather than arbitrarily defined thicknesses/ratios).

The properties of CE1 and IE1 are also given in Table 3.

**Table 3** Recipes and properties of CE1 and IE1

|  |  | CE1 | IE2 |
|---|---|---|---|
| PE1 | [wt.-%] | 100 | 95 |
| PP1 | [wt.-%] | - | 5 |
| **Composition Properties** |  |  |  |
| $MFR_2$ | [g/10 min] | 4.0 | 3.71 |
| $MFR_{21}$ | [g/10 min] | n.m. | 113 |
| $FRR_{21/2}$ | [g/10 min] | n.m. | 30.5 |
| T,; | [°C] | 117 | 119 |
| Tm | [°C] | 132 | 132 |
| Hm | [J/g] | 203 | 200 |
| **BOPE Properties** |  |  |  |
| Maximum stretching ratio | [-] | 6×12 | 6×16 |
| Film thickness | [$\mu$m] | 12 | 10 |
| Tensile Modulus (MD) | [MPa] | 650 | 1810 |
| Tensile Modulus (TD) | [MPa] | 610 | 3000 |
| Tensile Modulus (av) | [MPa] | 630 | 2405 |
| Tensile Strength (MD) | [MPa] | 42 | 50 |
| Tensile Strength (TD) | [MPa] | 23 | 151 |
| Tensile Strength (av) | [MPa] | 33 | 101 |
| Elongation @ Break (MD) | [%] | 46 | 99 |

(continued)

| BOPE Properties | | | |
|---|---|---|---|
| Elongation @ Break (TD) | [%] | 8 | 7 |
| Elongation @ Break (av) | [%] | 27 | 53 |

As can be seen from Table 3, the addition of the polymeric nucleating agent results in drastically improved mechanical properties, with tensile moduli and tensile strengths that are orders of magnitude better than the BOPE films that do not contain the polymeric nucleating agent. Furthermore, the inventive BOPE films have improved maximum stretching ratio, indicating improved an improved processability profile.

As discussed in the background section, the nucleation of polyethylenes such as PE1 and PE2 is known to be exceptionally difficult, thus is it remarkable that only 1 ppm of pVCH is sufficient to achieve these significant effects.

## Claims

1. A biaxially oriented polyethylene (BOPE) film consisting of one or more layers, wherein at least one of the one or more layers consists of a polymer composition (PC), wherein the polymer composition (PC) comprises:

   a) a polymer of ethylene (PE) having:

   i) a melt flow rate ($MFR_2$), determined according to ISO 1133 at 190 °C and 2.16 kg, in the range from 0.1 to 8.0 g/10 min; and
   ii) a density, determined according to ISO 1183-1, in the range from 910 to 970 kg/m$^3$,

   b) a polymeric nucleating agent (NU) comprising units derived from a vinyl monomer having a structure according to formula (I):

   $$H_2C=CH-CHR^1R^2 \qquad (I),$$

   wherein $R^1$ and $R^2$ are either individual alkyl groups with one or more carbon atoms or form an optionally substituted saturated, unsaturated or aromatic ring or a fused ring system containing 4 to 20 carbon atoms, whereby in case $R^1$ and $R^2$ form an aromatic ring, the hydrogen atom of the -$CHR^1R^2$ moiety is not present,

   wherein the combined amounts of the polymer of ethylene (PE) and the polymeric nucleating agent (NU), relative to the total weight of the polymer composition (PC), is at least 90.0 wt.-%.

2. The biaxially oriented polyethylene (BOPE) film according to claim 1, wherein the vinyl monomer having a structure according to formula (I) is selected from the group consisting of vinyl cycloalkanes, in particular vinyl cyclohexane, vinyl cyclopentane, and vinyl-2-methyl cyclohexane, 3-methyl-1-butene, 3-ethyl-1-hexene, 3-methyl-1-pentene, 4-methyl-1-pentene and mixtures thereof.

3. The biaxially oriented polyethylene (BOPE) film according to claim 2, wherein the vinyl monomer having a structure according to formula (I) is selected from the group consisting of vinyl cyclohexane, vinyl cyclopentane and vinyl-2-methyl cyclohexane and mixtures thereof.

4. The biaxially oriented polyethylene (BOPE) film according to any one of the preceding claims, wherein the polymeric nucleating agent (NU) is a homopolymer, most preferably a homopolymer of vinyl cyclohexane.

5. The biaxially oriented polyethylene (BOPE) film according to any one of the preceding claims, wherein the polymer of ethylene (PE) has one or more, preferably all, of the following properties:

   a) a density, determined according to ISO 1183-1, in the range from 930 to 965 kg/m$^3$, more preferably in the range from 950 to 960 kg/m$^3$; and
   b) a melt flow rate ($MFR_2$), determined according to ISO 1133 at 190 °C at a load of 2.16 kg, in the range from 0.3 to 6.0 g/10 min, more preferably in the range from 0.5 to 5.0 g/10 min.

6. The biaxially oriented polyethylene (BOPE) film according to any one of the preceding claims, wherein the polymer of ethylene (PE) has one or more, preferably all, of the following properties:

a) a zero-shear viscosity ($\eta_0$), determined according to ISO 6721, in the range from 1,000 to 10,000 Pa.s, more preferably in the range from 1,500 to 7,000 Pa.s, most preferably in the range from 2,000 to 4,000 Pa.s;
b) a shear thinning index ($SHI_{0/50}$), determined according to ISO 6721, in the range from 1.00 to 7.00, more preferably in the range from 1.50 to 6.00, most preferably in the range from 2.00 to 5.00;
c) a shear thinning index ($SHI_{0/100}$), determined according to ISO 6721, in the range from 1.00 to 9.00, more preferably in the range from 2.00 to 8.00, most preferably in the range from 3.00 to 7.00; and
d) a shear thinning index ($SHI_{1/100}$), determined according to ISO 6721, in the range from 1.00 to 8.00, more preferably in the range from 2.00 to 7.00, most preferably in the range from 2.50 to 6.00

7. The biaxially oriented polyethylene (BOPE) film according to any one of the preceding claims, wherein the polymer of ethylene (PE) has one or more, preferably all, of the following properties:

a) a crystallization temperature ($T_c$), determined according to ISO 11357 in the range from 105 to 125 °C, more preferably in the range from 110 to 122 °C, most preferably in the range from 114 to 119 °C;
b) a melting temperature ($T_m$), determined according to ISO 11357, in the range from 120 to 140 °C, more preferably in the range from 124 to 137 °C, most preferably in the range from 128 to 134 °C; and
c) an enthalpy of fusion ($H_m$), determined according to ISO 11357, in the range from 190 to 220 J/g, more preferably in the range from 195 to 215 J/g, most preferably in the range from 200 to 210 J/g.

8. The biaxially oriented polyethylene (BOPE) film according to any one of the preceding claims, wherein the polymer composition (PC) has one or more, preferably all, of the following properties:

a) a melt flow rate ($MFR_2$), determined according to ISO 1133 at 190 °C at a load of 2.16 kg, in the range from 0.1 to 8.0 g/10 min, more preferably in the range from 0.3 to 6.0 g/10 min, most preferably in the range from 0.5 to 5.0 g/10 min;
b) a melt flow rate ($MFR_{21}$), determined according to ISO 1133 at 190 °C at a load of 21.6 kg, in the range from 50 to 500 g/10 min, more preferably in the range from 80 to 350 g/10 min, most preferably in the range from 100 to 250 g/10 min; and
c) a flow rate ratio ($FRR_{21/2}$), determined according to ISO 1133 at 190 °C at loads of 21.6 kg and 2.16 kg, in the range from 15 to 70, more preferably in the range from 20 to 60, most preferably in the range from 25 to 55.

9. The biaxially oriented polyethylene (BOPE) film according to any one of the preceding claims, wherein the polymer composition (PC) has one or more, preferably all, of the following properties:

a) a crystallization temperature ($T_c$), determined according to ISO 11357 in the range from 107 to 127 °C, more preferably in the range from 112 to 124 °C, most preferably in the range from 116 to 121 °C;
b) a melting temperature ($T_m$), determined according to ISO 11357, in the range from 120 to 140 °C, more preferably in the range from 124 to 137 °C, most preferably in the range from 128 to 134 °C;
c) an enthalpy of fusion ($H_m$), determined according to ISO 11357, in the range from 175 to 215 J/g, more preferably in the range from 180 to 210 J/g, most preferably in the range from 185 to 205 J/g.

10. The biaxially oriented polyethylene (BOPE) film according to any one of the preceding claims, wherein the polymer composition (PC) further comprises from 1.0 to 10.0 wt.-% of a polyolefin (PO) that is different to the polymer of ethylene (PE).

11. The biaxially oriented polyethylene (BOPE) film according to claim 10, wherein the polyolefin (PO) that is different to the polymer of ethylene (PE) is a propylene homopolymer having one or more, preferably all, of the following properties:

a) a melt flow rate ($MFR_2$), determined according to ISO 1133 at 230 °C and 2.16 kg, in the range from 1.0 to 15.0 g/10 min;
b) a melting temperature ($T_m$), determined according to ISO 11357, in the range from 160 to 172 °C;
c) an enthalpy of fusion ($H_m$), determined according to ISO 11357, in the range from 100 to 130 J/g; and
d) a molecular weight distribution (Mw/Mn), determined by gel permeation chromatography, in the range from 4 to 20.

12. The biaxially oriented polyethylene (BOPE) film according to any one of the preceding claims, wherein the polymer composition (PC) comprises, more preferably consists of:

a) an amount in the range from 84.99 to 99.999999 wt.-%, more preferably in the range from 86.995 to 99.99999 wt.-%, most preferably in the range from 88.998 to 99.99995 wt.-%, relative to the total weight of the polymer composition (PC), of the polymer of ethylene (PE);
b) an amount in the range from 0.01 to 100 ppm, more preferably in the range from 0.1 to 50 ppm, most preferably in the range from 0.5 to 20 ppm, relative to the total weight of the polymer composition (PC), of the polymeric nucleating agent (NU);
c) optionally, an amount in the range from 1.0 to 10.0 wt.-%, more preferably in the range from 2.0 to 8.0 wt.-%, most preferably in the range from 3.0 to 6.0 wt.-%, relative to the total weight of the polymer composition (PC), of a polyolefin (PO) that is different to the polymer of ethylene (PE); and
d) optionally, from 0.0 to 5.0 wt.-% of further additives (A).

13. The biaxially oriented polyethylene (BOPE) film according to any one of the preceding claims, having a thickness in the range from 5 to 50 $\mu$m, more preferably in the range from 6 to 30 $\mu$m, most preferably in the range from 8 to 25 $\mu$m.

14. The biaxially oriented polyethylene (BOPE) film according to any one of the preceding claims, having an average tensile modulus ([Tens Mod(MD)+Tens Mod(TD)]/2), determined according to ISO 527-3, in the range from 1500 to 4000 MPa, more preferably in the range from 2000 to 3500 MPa, most preferably in the range from 2200 to 3000 MPa.

15. Use of a polymeric nucleating agent (NU) comprising units derived from a vinyl monomer having a structure according to formula (I):

$$H_2C=CH-CHR^1R^2 \qquad (I),$$

wherein $R^1$ and $R^2$ are either individual alkyl groups with one or more carbon atoms or form an optionally substituted saturated, unsaturated or aromatic ring or a fused ring system containing 4 to 20 carbon atoms, whereby in case $R^1$ and $R^2$ form an aromatic ring, the hydrogen atom of the -$CHR^1R^2$ moiety is not present, for increasing the average tensile modulus ([Tens Mod(MD)+Tens Mod(TD)]/2) of a biaxially oriented polyethylene (BOPE) film containing at least one layer consisting of a polymer composition that comprises a polymer of ethylene (PE) and the polymeric nucleating agent (NU), wherein the increased average tensile modulus is increased relative to an analogous biaxially oriented polyethylene (BOPE) film wherein the polymer composition does not contain the polymeric nucleating agent (NU).

## EUROPEAN SEARCH REPORT

**Application Number**

EP 24 17 0500

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2024/110024 A1 (AUBEE NORMAN [CA] ET AL) 4 April 2024 (2024-04-04) * paragraphs [0242] - [0264]; claims 1-6, 10; examples 3-9, 12, 14, 15; tables 2-4 * | 1-9, 13-15 | INV. C08J5/18 C08F10/00 C08L23/00 C08L23/08 |
| Y | US 2023/118316 A1 (WANG JIAN [US] ET AL) 20 April 2023 (2023-04-20) * paragraphs [0245] - [0270]; claims 1-4; tables 2-5 * | 1-9, 13-15 | |
| Y | JP 2012 139854 A (JAPAN POLYETHYLENE CORP) 26 July 2012 (2012-07-26) * paragraphs [0083], [0149]; claims 1-3, 13, 14 * | 1-9, 13-15 | |
| Y | EP 2 402 391 B1 (BOREALIS AG [AT]) 31 July 2013 (2013-07-31) * paragraphs [0100], [0104]; claims 1, 9 * | 1-9, 13-15 | |
| A | US 2018/298172 A1 (GITSAS ANTONIOS [AT] ET AL) 18 October 2018 (2018-10-18) * paragraphs [0026] - [0032]; claims 1, 4 * | 1-15 | **TECHNICAL FIELDS SEARCHED (IPC)** C08J C08F C08L |
| A | WO 2017/065192 A1 (MITSUBISHI PLASTICS INC [JP]) 20 April 2017 (2017-04-20) * claims 1-8 * | 1-15 | |
| A | EP 3 049 466 B1 (MILLIKEN & CO [US]) 20 November 2019 (2019-11-20) * claims 1, 10-13 * | 1-15 | |

The present search report has been drawn up for all claims

| Place of search | Date of completion of the search | Examiner |
|---|---|---|
| Munich | 27 September 2024 | Fischer, Viktor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 636 015 A1

**ANNEX TO THE EUROPEAN SEARCH REPORT
ON EUROPEAN PATENT APPLICATION NO.**  EP 24 17 0500

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2024

| Patent document cited in search report | Publication date | Patent family member(s) | Publication date |
|---|---|---|---|
| US 2024110024 A1 | 04-04-2024 | BR 112023021659 A2 | 19-12-2023 |
| | | CA 3211391 A1 | 27-10-2022 |
| | | CN 117320880 A | 29-12-2023 |
| | | EP 4326554 A1 | 28-02-2024 |
| | | EP 4414419 A2 | 14-08-2024 |
| | | JP 2024517099 A | 19-04-2024 |
| | | KR 20230173102 A | 26-12-2023 |
| | | US 2024110024 A1 | 04-04-2024 |
| | | WO 2022224103 A1 | 27-10-2022 |
| US 2023118316 A1 | 20-04-2023 | AR 122148 A1 | 17-08-2022 |
| | | BR 112022024210 A2 | 20-12-2022 |
| | | CN 115697700 A | 03-02-2023 |
| | | EP 4157634 A1 | 05-04-2023 |
| | | JP 2023527124 A | 27-06-2023 |
| | | US 2023118316 A1 | 20-04-2023 |
| | | WO 2021242384 A1 | 02-12-2021 |
| JP 2012139854 A | 26-07-2012 | JP 5830860 B2 | 09-12-2015 |
| | | JP 2012139854 A | 26-07-2012 |
| EP 2402391 B1 | 31-07-2013 | AU 2011273582 A1 | 20-12-2012 |
| | | CN 102958995 A | 06-03-2013 |
| | | EP 2402391 A1 | 04-01-2012 |
| | | ES 2430856 T3 | 22-11-2013 |
| | | KR 20130029408 A | 22-03-2013 |
| | | RU 2012155043 A | 10-08-2014 |
| | | US 2013237652 A1 | 12-09-2013 |
| | | WO 2012000958 A1 | 05-01-2012 |
| US 2018298172 A1 | 18-10-2018 | BR 112018006812 A2 | 16-10-2018 |
| | | CN 108137833 A | 08-06-2018 |
| | | EA 201800232 A1 | 28-09-2018 |
| | | EP 3362504 A1 | 22-08-2018 |
| | | ES 2842237 T3 | 13-07-2021 |
| | | JP 6592192 B2 | 16-10-2019 |
| | | JP 2018538373 A | 27-12-2018 |
| | | KR 20180061328 A | 07-06-2018 |
| | | MX 367195 B | 08-08-2019 |
| | | SG 11201802793S A | 30-05-2018 |
| | | TW 201726374 A | 01-08-2017 |
| | | US 2018298172 A1 | 18-10-2018 |
| | | WO 2017064224 A1 | 20-04-2017 |
| WO 2017065192 A1 | 20-04-2017 | JP 6787025 B2 | 18-11-2020 |
| | | JP 2017075311 A | 20-04-2017 |

## ANNEX TO THE EUROPEAN SEARCH REPORT
## ON EUROPEAN PATENT APPLICATION NO.

EP 24 17 0500

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2024

| Patent document cited in search report | Publication date | Patent family member(s) | Publication date |
|---|---|---|---|
| | | WO 2017065192 A1 | 20-04-2017 |
| EP 3049466 B1 | 20-11-2019 | BR 112016006273 A2 | 19-05-2020 |
| | | CN 105593284 A | 18-05-2016 |
| | | EP 3049466 A1 | 03-08-2016 |
| | | JP 6133501 B2 | 24-05-2017 |
| | | JP 2016531958 A | 13-10-2016 |
| | | KR 20160060124 A | 27-05-2016 |
| | | RU 2016115616 A | 30-10-2017 |
| | | US 2015086736 A1 | 26-03-2015 |
| | | WO 2015042569 A1 | 26-03-2015 |

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2021079255 A1
- WO 2020257411 A1
- WO 2015154253 A1
- WO 2009139957 A2
- EP 3049388 A1
- US 2013165590 A1
- WO 2016066446 A1

### Non-patent literature cited in the description

- **DOTSON, DARIN L.** ; **MILLIKEN**. *A NOVEL NUCLEATING AGENT FOR POLYETHYLENE.*, 2007
- **SEVEN, KARL M.** ; **JEFFREY M. COGEN** ; **JAMES F. GILCHRIST**. Nucleating agents for high-density polyethylene A review. *Polymer Engineering and Science*, 2016, vol. 56, 541-554
- **L. MANDELKERN, R. G. ALAMO**. Physical properties of polymers handbook. Springer, 2007
- **HEINO, E.L.** ; **LEHTINEN, A.** ; **TANNER J.** ; **SEPPÄLÄ, J.** Rheological characterization of polyethylene fractions. *Theor. Appl. Rheol., Proc. Int. Congr. Rheol, 11th*, 1992, vol. 1, 360-362
- **HEINO, E.L.** The influence of molecular structure on some rheological properties of polyethylene. *Annual Transactions of the Nordic Rheology Society*, 1995
- Definition of terms relating to the non-ultimate mechanical properties of polymers. *Pure & Appl. Chem*, 1998, vol. 70 (3), 701-754
- **BUSICO, V.** ; **CIPULLO, R.** *Prog. Polym. Sci.*, 2001, vol. 26, 443
- **BUSICO, V.** ; **CIPULLO, R.** ; **MONACO, G** ; **VACATELLO, M.** ; **SEGRE, A.L.** *Macromolecules*, 1997, vol. 30, 6251
- **ZHOU, Z.** ; **KUEMMERLE, R.** ; **QIU, X.** ; **REDWINE, D.** ; **CONG, R.** ; **TAHA, A.** ; **BAUGH, D. WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 11289
- **RESCONI, L.** ; **CAVALLO, L** ; **FAIT, A.** ; **PIEMONTESI, F.** *Chem. Rev.*, 2000, vol. 100, 1253
- **WANG, W-J.** ; **ZHU, S.** *Macromolecules*, 2000, vol. 33, 1157
- **CHENG, H. N.** *Macromolecules*, 1984, vol. 17, 1950
- **BUSICO, V.** ; **CIPULLO, R.** ; **MONACO, G.** ; **VACATELLO, M.** ; **SEGRE, A.L.** *Macromolecules*, 1997, vol. 30, 6251
- **RESCONI, L.** ; **CAVALLO, L.** ; **FAIT, A.** ; **PIEMONTESI, F**. *Chem. Rev.*, 2000, vol. 100, 1253